Europäisches Patentamt

European Patent Office

Office européen des brevets

(19)

(11) Veröffentlichungsnummer: **0 380 011**
**A2**

# (12) EUROPÄISCHE PATENTANMELDUNG

(21) Anmeldenummer: **90101162.7**

(22) Anmeldetag: **20.01.90**

(51) Int. Cl.5: **C01F 7/36, C04B 35/10**

(30) Priorität: **23.01.89 US 302189**

(43) Veröffentlichungstag der Anmeldung:
**01.08.90 Patentblatt 90/31**

(84) Benannte Vertragsstaaten:
**AT BE CH DE ES FR GB GR IT LI LU NL SE**

(71) Anmelder: **VEREINIGTE ALUMINIUM-WERKE AKTIENGESELLSCHAFT**
**Berlin - Bonn Postfach 2468**
**Georg-von-Boeselager-Strasse 25**
**D-5300 Bonn 1(DE)**

(72) Erfinder: **Greber, Jörg, Dr.**
**Zum guten Hirten 8**
**D-8460 Schwandorf(DE)**
Erfinder: **Melas, Heidemarie**
**Am Kaninberg 5**
**D-5210 Troisdorf(DE)**

(74) Vertreter: **Müller-Wolff, Thomas, Dipl.-Ing.**
**Vereinigte Aluminium-Werke AG**
**Georg-von-Boeselager-Strasse 25 Postfach 2468**
**D-5300 Bonn 1(DE)**

(54) **Verfahren zur Herstellung von transparenter Aluminiumoxidkeramik.**

(57) Zur Herstellung von transparenter Aluminiumoxidkeramik wird ein Aluminiumoxid mit besonders hoher chemischer Reinheit gefordert Hierfür muß zunächst ein ausreichend reines Aluminiumoxidausgangsmaterial gewonnen werden, das onhe Kalzination und Kontakt-Mahlung des Aluminiumoxids auskommt.

Es wird ein Verfahren zur Darstellung eines säurehaltigen Aluminiumoxidmonohydrats für die Verwendung bei der Herstellung transparenter Keramik in folgenden Schritten vorgeschlagen:
- bereitstellen eines Aluminiummalkoxids in einem Lösungsmittel
- solvolysieren und peptisieren dieses Aluminiumalkoxids mit einer Mischung aus Wasserdampf und Säuredampf
- entfernen des Lösungsmittels sowie destillierbarer Nebenprodukte aus der Mischung, wobei sich ein Rückstand bildet
- zugeben von Wasser und erhitzen des Rückstandes mit Wasser, bis ein homogenes Gel entstanden ist und
- trocknen des Gels, bestehend im wesentlichen aus Aluminiumhydroxid mit etwa 12,5 bis 25 Gew-% gebundener Säure
Verwendung bei der Erzeugung von Natriumdampflampengehäusen

EP 0 380 011 A2

# Verfahren zur Herstellung von transparenter Aluminiumoxidkeramik

Die vorliegende Erfindung betrifft ein Verfahren zur Herstellung transparenter Aluminiumoxidkeramik ausgehend von säurehaltigem Aluminiumoxidmonohydrat sowie ein säurehaltiges Al-Oxidmonohydrat in Form eines Gels.

Aluminiumoxid ist ein Rohstoff für die Herstellung von Keramik mit besonders hoher Härte und gutem chemischen Korrosionswiderstand. Aluminiumoxidkeramik wird üblicherweise durch Sintern von Mischungen aus Aluminiumoxid mit anderen Oxiden hergestellt. Höchstwertige Formteile aus Aluminiumoxidkeramik werden nahezu ausschließlich aus besonders reinem Aluminiumoxid erzeugt, dem als Sinterhilfsmittel kleine Anteile von Magnesiumoxid oder Titandioxid zugesetzt werden, so daß die resultierende Keramik einen Aluminiumoxidgehalt von 99,7 % hat.

Metallurgisches Aluminiumoxid, das im Bayer-Prozeß aus Bauxit hergestellt wird, enthält mehrere bei der Herstellung reiner Oxidkeramik störende Verunreinigungen, wie Natriumoxid mit etwa 0,3 - 0,5 %, Siliziumdioxid mit etwa 0,02 - 0,05 %, Eisenoxid mit bis zu 0,05 %. Metallurgisch reines Aluminiumoxid, das einen mittleren Korndurchmesser von etwa 50 - 100 $\mu$m besitzt, ist zu grob für die Herstellung hochqualitativer Keramik. Um die gewünschten Eigenschaften in der Keramik zu erreichen, muß das Aluminiumoxid möglichst homogene Eigenschaften besitzen, was erreicht wird durch einen relativ exakten Kalzinationsgrad, verbunden mit einem geeigneten Mahlverfahren. Diese Eigenschaften des Aluminiumoxids werden weiter unten diskutiert.

Für bestimmte Anwendungen wird eine nach speziellen Verfahren hergestellte transparente Aluminiumoxidkeramik mit bestimmten Eigenschaften benötigt.

Durchsichtige Aluminiumoxidkeramik ist vor allem nützlich in der Erzeugung von Natriumdampflampengehäusen, da die Aluminiumoxidkeramik eine hohe chemische Beständigkeit gegenüber dem agressiven, reduzierenden Natriumdampf aufweist. Für die Erzeugung von transparenter Aluminiumoxidkeramik wird ein Aluminiumoxid mit besonders hoher chemischer Reinheit gefordert. Insbesondere sind die Konzentrationen von Siliziumoxid, Eisenoxid, Manganoxid und anderen oxidischen Schwermetallverunreinigungen im Aluminiumoxid entscheidend für die Bestimmung der Eignung des Aluminiumoxids zur Herstellung von transparenter Keramik. Der Grund dafür ist, daß die Schwermetalloxide und Siliziumdioxid durch den Natriumdampf bei den Betriebsbedingungen der Natriumdampfhochdrucklampen zum elementaren Metall reduziert werden, was wiederum zu einer Verminderung der Lichtdurchlässigkeit des keramischen Lampengehäuses führt.

Eine besondere Schwierigkeit in der Herstellung transparenter Keramik liegt darin, daß zunächst ein ausreichend reines Aluminiumoxidausgangsmaterial gewonnen werden muß.

Ein bekanntes Verfahren, um gereinigtes Aluminiumoxid zu erhalten, geht aus von der thermischen Zersetzung von Aluminiumalaun. Aluminiumalaun kann wegen seiner besonders guten Kristallisationseigenschaften leicht gereinigt werden, was einen niedrigen Verunreinigungsgehalt mit sich bringt. Andere Verfahren zur Reinigung von Aluminiumoxid beruhen auf der fraktionierten Destillation von flüchtigen Aluminiumverbindungen, wie Aluminiumalkoxide und Aluminiumalkyle, die dann anschließend zu Aluminiumoxiden oder seinen Vorprodukten wie Aluminiumhydroxiden bzw. anderen Aluminiumsalzen zersetzt werden.

Beide Verfahren gewährleisten in der Regel tolerierbare Gehalte an Verunreinigungen, die wie durch folgende Grenzen veranschaulicht werden.

| | |
|---|---|
| SiO$_2$ | max. 20 ppm |
| Fe$_2$O$_3$ | max. 10 ppm |
| Cr$_2$O$_3$ | max. 5 ppm |
| TiO$_2$ | max. 10 ppm |
| andere Elemente | max. 5 ppm |

Die bestehende Technologie zur Herstellung von durchsichtigen Lampengehäusen verlangt hochkalziniertes Aluminiumoxid, um die zur keramischen Weiterverarbeitung erforderlichen Eigenschaften einzustellen. Speziell wird die Kalzinierung auf eine BET-Oberfläche von 1 - 10 m$^2$/g eingestellt. (BET wird gemessen durch Stickstoffabsorption nach Brunauer, Emmet u. Teller), (siehe ISO-Standard Nr. ISO-8008-1986 (E))).

Die Kalzination von hochreinen Oxiden ist problematisch, da bei direkter Beheizung Verunreinigungen durch den Brennstoff, der benutzt wird, um die Temperatur für die Kalzination zu erreichen, in das Produkt eingetragen werden können. Eine indirekte Beheizung bei der Kalzination vermeidet zwar diese Kontaminationsquelle, sie hat aber den Nachteil, daß sie nicht ohne weiteres in kontinuierliche Operationen integrierbar ist. Bei chargenweiser Kalzination besteht aber die Gefahr, daß wegen der niedrigen Pulverdichte, die eine schwache Wärmeleitfähigkeit erzeugt ein Temperaturgradient durch das Material hindurch eintritt. So können große Unterschiede im Brennzustand (Kalzinationszustand) des Oxides erzeugt werden. Der Kalzinationszustand aber bestimmt die keramische Reaktivität des Oxids. Daraus ergibt sich, daß, um gleichförmiges Sintern zu erreichen, nur minimale Unterschiede im Kalzinationszustand auftreten sollten. Folglich sind die Verarbeitungseigenschaften des kalzinierten Materials nicht grundsätzlich akzeptierbar zur Herstellung von durchsichtiger Aluminiumkeramik.

Ein weiterer kritischer Aspekt bei der Herstellung von Oxiden für die Transparentkeramik ist die mittlere Partikelgröße der kalzinierten Oxide. Die kalzinierten Oxide müssen extrem fein zermahlen werden, damit die Oxide nachfolgend erfolgreich gesintert werden können und daraus dichte Formkörper gebildet werden können. Sorgfältig kalziniertes Material weist grundsätzlich einen hohen Härtewert auf. Dies erfordert ein nicht berührungsfreies Mahlen, was wiedeum zu einer Kontamination des Oxidmaterials durch Partikel, die vom Mahlkörper abgerieben worden sind, führen kann. Diese kontaminierenden Teilchen können Fehlstellen im gesinterten Produkt erzeugen und damit die Ausschußrate bei der Herstellung von Gegenständen aus transparenter Keramik erhöhen.

Demnach liegen die kritischen Punkte bei der Herstellung der Aluminiumoxide für die transparente Keramik in der Kalzination und in den Mahlschritten des reinen Aluminiumoxids.

Es ist bekannt, daß durchsichtige Körper durch Sintern von Aluminiumoxidmonohydratgel erzeugt werden können. Allerdings weiß man auch, daß derartige Körper einen hohen Porositätsgrad haben, so daß ihre Verwendung als Lampenröhren ausgeschlossen ist, da sie ja gerade wegen dieser hohen Porosität nicht gasundurchlässig sind.

So hat Yoldas (Amer. Journal of Material Science 10 (1975) 1856) beschrieben, daß durch Pyrolyse von Formkörpern, die aus Aluminiumoxidmonohydratgel hergestellt worden sind, durchsichtige, aber stark poröse Körper gebildet werden, die als z.B. Katalysatorträger verwendet werden können. Das von Yoldas ausgearbeitete Verfahren hat den Nachteil, daß das Gel zu Körpern geformt wird, die nachfolgend getrocknet werden. Während des Trocknungsprozesses besteht die Gefahr, daß, verursacht von der Schwindung, Risse in den geformten Körpern auftreten können. Die im Körper während des Trocknens gebildeten Risse heilen beim Kalzinationsvorgang nicht aus.

Demnach ist dieses Verfahren nur für die Herstellung dünner Schichten geeignet, die auch andersartige Träger verschiedener Natur, wie Aluminiumoxid oder andere keramische Materialien aufgebracht werden können. Folglich knüpft unsere Suche an Zusammensetzungen und Verfahren zur Herstellung transparenter Keramiken an, wobei die bekannten Konsistenz- und Porositätsprobleme vermieden werden sollen.

Aufgabe der vorliegenden Erfindung ist es deshalb, ein Herstellungsverfahren für ein Ausgangsmaterial für durchsichtige Keramik zu entwickeln, das ohne Kalzination und Kontakt-Mahlung des Aluminiumoxides auskommt.

Die Vorgehensweise und andere Merkmale sowie Vorteile der vorliegenden Erfindung werden durch die folgende Beschreibung augenscheinlich werden.

In der vorliegenden Erfindung wird Aluminiumoxidmonohydrat als Ausgangsmaterial für die Herstellung von durchsichtiger Keramik benutzt. Dieses Aluminiumoxidmonohydrat wird durch Hydrolyse und Peptisierung eines Aluminiumalkoxids mit einer Mischung aus Wasserdampf in einem Säuredampf dargestellt. Das Nebenprodukt Alkohol wird aus der Mischung entfernt, wobei ein Rückstand zurückbleibt; dieser Rückstand wird mit Wasser vermischt; diese Mischung wird beheizt, bis ein homogenes Gel entstanden ist. Das Gel beinhaltet ein Aluminiumoxidmonohydrat, das etwa 12,5 bis 25 Gew.-% gebundener Säure einschließt, welche für Essigsäure als organischer Kohlenstoffgehalt gemessen werden kann. Das Gel wird getrocknet. Selbstverständlich können andere Säuren wie Salpetersäure nicht durch Analyse des organischen Kohlenstoffs bestimmt werden, so daß ein anderes entsprechend passendes Verfahren benutzt werden muß. Das getrocknete Gel wird dann bis zu einer Feinheit von im Mittel 2 μm (Mikrometer) gemahlen, bevor es verarbeitet wird.

Peptisierung ist ein Prozeß zur Bildung eines Gels des Monohydrats. Dazu werden Säuremoleküle benutzt, die sich als molekulare Schicht um das Monohydrat legen, so daß die Kristalle leicht durch Wasser voneinander getrennt werden können, vorzugsweise bei erhöhter Temperatur. Das sich ergebende Gel ist lichtdurchlässig und stabil, so fallen z.B. die peptisierten Teilchen nicht aus dem Gel aus. Die Säure ist an das Monohydrat gebunden. Dies ist definiert als Bindung an das Monohydrat über schwache Kräfte wie van der Waalskräfte, die elektrostatischer Natur sind. Die Säure reagiert nicht mit den OH-Gruppen um Aluminiumacetat zu bilden. Die elektrostatische Wechselwirkung führt jedoch zu einer Polarisierung der

EP 0 380 011 A2

Valenzschale jener Säuremoleküle, die das Monohydrat bedecken, was wiederum verursacht, daß sich diese Schalen gegenseitig abstoßen und somit die Trennung dieser Teilchen in Wasser unterstützen.

Die Peptisierung kann erreicht werden durch die Reaktion des Monohydrats mit jedweder Säure. Bevorzugt werden einbasige Säuren, die in Wasser dissoziiert lediglich 1 hydratisiertes Proton ergeben.

Natürlich benötigt man für verschiedenartige Prozeßunterschiede verschiedene Säuren. Z.B. kann Salpetersäure oder Salzsäure benutzt werden, obgleich diese Säuren korrosive oder toxische Gase beim Sinterungsprozeß bilden können. Folglich wird eine Säure wie Essigsäure bevorzugt, denn sie erzeugt ungiftiges Kohlendioxid bei der Sinterung. Die Erfindung ist aber nicht auf die Wahl der Säure wie z.B. Essigsäure beschränkt.

Organisch gebundener Kohlenstoff wird als Indikator des Säuregehaltes beim Einsatz von Essigsäure zur Peptisierung des Monohydrats verwendet. Die Essigsäure ist so stark ans Aluminiumoxidmonohydrat gebunden, daß eine direkte Analyse durch Titration (zur Bestimmung des Säuregehaltes) nicht möglich ist. Die Kohlenstoffgehalte erstrecken sich über 5 - 10 % und korrelieren linear mit einem Essigsäuregehalt von 12,5 bis 25% . Dieses indirekte Verfahren ist zwar sehr anschaulich, es ist aber leicht einzusehen, daß andere analytische Methoden eingesetzt werden können, um den gebundenen Säureanteil zu bestimmen.

Das Ausgangsmaterial zur Darstellung des Al-oxidmonohydrats ist ein Aluminiumalkoxid, z.B. Aluminiumisopropylat, Aluminiumbutylat oder Aluminiumethylat. Das Alkoxid wird dabei in einem Schritt hydrolisiert und peptisiert um schließlich das gewünschte säurehaltige Aluminiumoxidmonohydrat zu liefern.

Ein Vorteil der vorliegenden Erfindung ist, daß zum Mahlen auch Strahlmühlen eingesetzt werden können, die ein nichtkontaminiertes Produkt ergeben, da sie ohne Direktkontakt arbeiten. Strahlmühlen sind für das säurehaltige Aluminiumoxidmonohydrat deshalb verwendbar, weil dies verglichen mit kalziniertem Aluminiumoxid, sehr weich ist, und deshalb leicht mit einer Strahlmühle wie z.B. einer Luftstrahlmühle, die trockene Luft oder ein anderes Intertgas zum Mahlen verwendet, auf den gewünschten Feinheitsgrad gebracht werden kann.

Es können jedoch auch andere Mahlapparaturen ohne einen Qualitätsverlust des Produktes benutzt werden, sofern das Gel nur hinreichend zermahlen wird auf einen mittleren Korndurchmesser von etwa 2 μm, ohne Kontamination.

Das zermahlene säurehaltige Aluminiumoxidmonohydrat kann ohne weitere Vorbehandlung im Trockenpreßverfahren zu ungesinterten Grünkörpern verarbeitet werden, die dann in einem Vakuumofen oder in Wasserstoffstrom zu durchsichtigen Aluminiumoxidkeramikkörpern weiterverarbeitet werden. Ggf. können Sinterhilfsmittel wie sie zur Herstellung von transparenter Aluminiumoxidkeramik üblicherweise zugesetzt werden, z.B. MgO, dem Aluminiumoxidmonohydrat vor dem Trockenpreßverfahren zugegeben werden. Jede hydrolisierbare Magnesiumverbindung z.B. Magnesiumethylat, kann dem Aluminiumalkoxid vor der Solvolyse zugesetzt werden, so daß dieses Sinterungshilfsmittel homogen im peptisierten Aluminiumoxidmonohydrat verteilt wird. Das Sinterhilfsmittel Magnesiumoxid bietet den zusätzlichen Vorteil der Steuerung des Kristallwachstums bei der Sinterung, wobei es eine homogene Struktur der Aluminiumoxidkristalle im gesinterten Körper aufbaut, die z.B. für die Herstellung von gesinterten transparenten Hochdrucknatriumdampflampengehäusen verwendbar ist. Natürlich können auch andere Zusätze benutzt werden.

Das gemahlene peptisierte und getrocknete säurehaltige Aluminiumoxidmonohydrat läßt sich mit den in der Keramikindustrie üblichen Verdichtungsmaschinen weiterverarbeiten. Solche Verdichtungsmaschinen werden in der Keramikindustrie benutzt, um Grünkörper für das Trocken-Preßverfahren durch Formen und Verdichten von Pulvern zu bilden. Die für die Grünverdichtung erforderlichen Preßdrücke liegen zwischen 50 und 150 N/mm$^2$.

Überraschenderweise lassen sich diese Körper, die aus dem säurehaltigen Monohydrat gebildet worden sind, ohne einen zwischengeschalteten Schritt der Trocknung oder Vorentwässerung zu dichten Körpern sintern, wobei die Körper während der Sinterung durchsichtig werden. Dies ist umso überraschender als die reduzierte Gründichte, die beim Trockenpressen erreicht wurde, um 1 g/cm$^2$ liegt. Folglich wäre es - basierend auf allgemeiner Erfahrung - nicht zu erwarten, daß diese Grünkörper praktisch zu der theoretischen Dichte von Aluminiumoxid, in unserem Fall 3,98 g/cm$^2$, gesintert werden können. Im allgemeinen müssen, um Aluminiumoxide in Keramik zu verwandeln, die handelsüblichen Oxide wenigstens auf 50 % der theoretischen Dichte von reinem, undotiertem Aluminiumoxid grünverdichtet werden, um praktisch die theoretische Dichte bei der Sinterung zu erreichen. Bei einer geringeren Gründichte - so wurde geglaubt - könnte die theoretische Dichte während der Sinterung nicht erreicht werden. Es ist zu bemerken, daß die Sinterung in konventioneller Art und Weise ausgeführt worden ist, typischerweise im Vakuumofen und/oder im Wasserstoffofen, und daß die Zeiten und Temperaturen, die diskutiert werden, nur veranschaulichend sind.

Die Erfindung wird nun in Verbindung mit den nachfolgenden Beispielen näher erläutert.

4

**Beispiel 1:**

In einen Rührkessel werden 200 kg Isopropylalkohol und 90 kg Aluminiumisopropylat gegeben und auf 80 °C unter Rühren erhitzt. Der Mischung wird Magnesiumethylat (hergestellt von Dynamit Nobel, Troisdorf, BRD) so zugesetzt, daß sich ein Gewichtsverhältnis von MgO zu $Al_2O_3$ wie 8 : 10000 ergibt. Eine Mischung aus Essigsäuredampf und Wasserdampf wird durch ein Tauchrohr in die Mischung, die im Rührkessel enthalten ist, eingeleitet. Der Dampf wurde erzeugt durch Verdampfung einer Mischung aus 3,9 kg Essigsäure und 15,8 kg Wasser in einem Verdampfer. Die Einleitungsgeschwindigkeit des Dampfgemisches wird durch Regelung der Heizleistung des Verdampfer so eingestellt, daß die gesamte vorgelegte Flüssigkeitsmenge innerhalb von 2 Stunden in den Rührkessel eingeleitet wird. Während dieser Zeit wird das Reaktionsgemisch auf der Temperatur von 80 °C gehalten. Nachdem der Dampf vollständig eingeleitet worden ist, wird die Reaktionsmischung für weitere 3 Stunden gerührt. Im Anschluß daran wird sowohl das als Lösungsmittel eingesetzte Isopropanol als auch das bei der Solvolysereaktion des Aluminiumalkoxid freigesetzte Isopropanol durch Destillation aus dem Reaktionsgemisch abgetrennt, wobei ein Pulverrückstand zurückbleibt.

Das nach der Destillation zurückbleibende Pulver wird mit 50 kg Wasser versetzt. Die dabei noch freiwerdenden Reste an Isopropanol werden ebenfalls durch Destillation aus dem Rührkessel entfernt. Durch Heizen des Rührkessels wird die Temperatur auf Siedetemperatur des Wassers - etwa 100 °C - angehoben. Die Reaktionsmischung wird dann für weitere 5 Stunden gerührt, so daß eine homogene Mischung hergestellt wird. Die Heizung wird so eingestellt, daß ein schwacher Rückfluß aufrecht erhalten wird. Nach fünfstündigem Kochen bei schwachem Rückfluß wird das Wasser aus dem Kessel bei etwa 100 bis 120 °C abdestilliert, bis sich ein fester trockener Rückstand von peptisiertem und getrocknetem Aluminiumoxidmonohydrat, das zwischen 5 bis 10 % organisch gebundenen Kohlenstoff enthält, gebildet hat. Das peptisierte und getrocknete Aluminiumoxidmonohydrat wird dem Rührkessel entnommen und durch Mahlen, vorzugsweise mit einer Luftstrahlmühle, bis zu einem mittleren Korndurchmesser von 2 μm zerkleinert.

Aus dem Pulver werden auf einer hydraulischen Presse Prüfkörper mit den Abmessungen 1 cm x 1 cm x 0,4 cm bei einem Preßdruck von 100 N/mm² geformt. Diese Formkörper werden in einem induktiv beheizten Vakuumofen, wie "Balzers-Brennofen, Modell USE 02", innerhalb von 24 Stunden auf eine Temperatur von 1850 °C gebracht. Diese Temperatur wird für 5 Stunden eingehalten. Nach Abschalten der Heizung läßt man die Testproben im Ofen auf Raumtemperatur abkühlen. Die dem Ofen entnommenen Proben sind durchsichtig und weisen bei der mikroskopischen Untersuchung ein sehr gleichmäßiges Gefüge auf. Abplatzungen oder Risse können an den Körpern nicht festgestellt werden.

**Vergleichsbeispiel 1:**

200 kg Isopropylalkohol und 90 kg Aluminiumisopropylat werden in einen Kessel gegeben und unter Rühren auf 80 °C erhitzt. Der Mischung wird Magnesiumethylat so zugesetzt, daß sich ein Gewichtsverhältnis von MgO zu $Al_2O_3$ wie 8 : 10000 ergibt. Ein Gemisch aus Essigsäuredampf und Wasserdampf wird in die Mischung, die in dem Rührkessel enthalten ist, durch ein Tauchrohr eingeleitet. Die Dampfmischung wurde erhalten durch Verdampfen einer Mischung 3,9 kg Essigsäure mit 15,8 kg Wasser in einem Verdampfer. Die Einleitungsgeschwindigkeit des Dampfgemisches in den Kessel hinein wird durch Regelung der Heizleistung des Verdampfers so eingestellt, daß die gesamte vorgelegte Flüssigkeitsmenge innerhalb von 2 Stunden eingetragen wird. Das Reaktionsgemisch wird während dieser Zeit auf der Temperatur von 80 °C gehalten. Nachdem die Dampfeinleitung abgeschlossen ist, wird die Reaktionsmischung für weitere drei Stunden gerührt. Im Anschluß daran wird sowohl das als Lösungsmittel eingesetzte Isopropanol als auch das bei der Solvolysereaktion des Aluminiumalkoxids freigesetzte Isopropanol durch Destillation aus dem Reaktionsgemisch abgetrennt.

Der nach der Destillation zurückbleibende Pulverrückstand wird mit 50 kg Wasser versetzt. Die dabei noch freiwerdenden Reste an Isopropanol werden ebenfalls durch Destillation aus dem Rührkessel entfernt. Durch Heizen des Rührkessels wird nun die Temperatur bis zur Siedetemperatur des Wassers, etwa 100 °C, erhöht. Die Reaktionsmischung wird dann zur Herstellung einer homogenen Mischung weitere 5 Stunden gerührt, wobei die Heizung so gesteuert wird, daß ein schwacher Rückfluß aufrecht erhalten wird.

Nach Abschluß der Kochstufe wird das Wasser aus dem Rührkessel bei 160 bis 180 °C destillativ entfernt, bis ein fester trockener Rückstand von peptisiertem und getrocknetem Aluminiumoxidmonohydrat erhalten wird. Das Pulver, das nach der Destillation zurückbleibt, ist bernsteinfarben. Durch die höhere Destillationstemperatur wird ein Teil der Essigsäure thermisch zersetzt, was zur Folge hat, daß der an das Aluminiumoxidmonohydrat gebundene Anteil an Essigsäure vermindert wird. Das peptisierte und getrocknete Aluminiumoxidmonohydrat wird dem Rührkessel entnommen und durch Zerreiben oder Mahlen in einer Luftstrahlhülle bis zu einem mittleren Korndurchmesser von 2 μm zerkleinert.

Aus dem Pulver werden mit einer hydraulischen Presse Prüfkörper mit den Abmessungen 1 cm x 1 cm x 0,4 cm bei einem Preßdruck von 100 N/mm² geformt. Diese Formkörper werden in einem induktiv beheiztem Vakuumofen innerhalb von 24 Stunden auf eine Temperatur von 1850 °C gebracht. Diese Temperatur wird für 5 Stunden aufrecht erhalten. Nach Abschalten der Heizung läßt man anschließend die Proben im Ofen auf Zimmertemperatur abkühlen.

Die dem Ofen entnommenen Körper sind opak und weisen Abplatzungen auf.

Die in Beispiel 1 und Vergleichsbeispiel 1 erhaltenen peptisierten und getrockneten Aluminiumoxidmonohydrate haben die folgende Zusammensetzung:

| bezogen auf AL$_2$O$_3$ | Beispiel 1 | Vergleichsbeispiel 1 |
|---|---|---|
| organ. geb. Kohlenstoff | 7 % | 4% |
| MgO | 800 ppm | 800 ppm |
| Fe$_2$O$_3$ | 9 ppm | 7 ppm |
| SiO$_2$ | 14 ppm | 17 ppm |
| Cr$_2$O$_3$ | 5 ppm | 5 ppm |

Der Unterschied in der Prozeßführung von Beispiel 1 und Vergleichsbeispiel 1 ist folgender:

In Vergleichsbeispiel 1 wird das Wasser bei höherer Temperatur (160 bis 180 °C statt 100 bis 120 °C) als bei Beispiel 1 aus dem Reaktionsgemisch abdestilliert. Dies hat zur Folge, daß ein Teil der Essigsäure pyrolysiert wird. Daher ist der Gehalt der ans Monohydrat gebundenen Säure vermindert. Dies spiegelt sich wieder im Unterschied an organisch gebundenem Kohlenstoff, der sich von 7 % aus Beispiel 1 nach 4 % im Vergleichsbeispiel 1 verringert hat. Das entspricht einer Erniedrigung an gebundener Essigsäure von 17,5 % aus Beispiel nach 10 % zum Vergleichsbeispiel 1. Obwohl dieser Unterschied relativ klein erscheint, ist der Effekt am Endprodukt gravierend, denn eine durchsichtige Aluminiumoxidkeramik wird im Vergleichsbeispiel 1 nicht erreicht.

**Vergleichsbeispiel 2:**

Aluminiumoxidmonohydrat (erzeugt als Produkt Nr. NB 400 von VAW) wurde in einem induktiv beheiztem Drehrohrofen (hergestellt von SMIT-Ovens) bei einer Temperatur von 1180 °C in einer kontinuierlichen Operation kalziniert. Dies lieferte ein Aluminiumoxid mit einer effektiven spezifischen BET-Oberfläche von 125 m²/g. Dieses Oxid wurde im Anschluß daran in einer Luftstrahlmühle bis zu einem mittleren Korndurchmesser von 2 μm gemahlen. Der niedrige Kalzinationsgrad gestattete es, in diesem Beispiel eine Strahlmühle zu verwenden. Aus diesem Pulver wurden - wie in Beispiel 1 beschrieben - Testproben hergestellt, die dann in einem Vakuumofen wie in Beispiel 1 gesintert wurden. Die dem Ofen entnommenen Körper sind opak und weisen Abplatzungen auf.

**Vergleichsbeispiel 3:**

Aluminiumoxidmonohydrat (NB 400 von VAW) wurde in einem induktiv beheiztem Drehrohrofen kalziniert. Dies ergab ein Aluminiumoxid mit einer effektiven spezifischen BET-Oberfläche von 16 m²/g. Dieses Oxid wurde in einer Luftstrahlmühle bis zu einem mittleren Korndurchmesser von 2 μm gemahlen. Aus dem Pulver wurden Prüfkörper hergestellt, die nachfolgend unter den gleichen Bedingungen wie die Prüfkörper in Beispiel 1 gebrannt wurden. Die dem Ofen entnommenen Probekörper waren opak und wiesen Abplatzungen auf.

**Vergleichsbeispiel 4:**

Aluminiumoxidmonohydrat (NB 400 von VAW) wurde in einem induktiv beheizten Drehrohrofen kalziniert. Dies ergab ein Aluminiumoxid mit einem effektiven spezifischen BET-Oberflächengebiet von 7 m²/g.

Dieses Oxid verbackte an der Ofenwand, was anzeigte, daß dieses Material den höchsten Kalziniationsgrad der mit dieser Ausrüstung zu erlangen war, erreichte.

Das Oxid wurde nachfolgend in einer Kontakt-Mühle bis zu einem mittleren Korndurchmesser von 2 μm gemahlen. Dabei wurde das gemahlene Oxid durch Abrieb während des Mahlvorganges kontaminiert. Aus diesem Pulver wurden Prüfkörper wie in Beispiel 1 erzeugt und denselben Sinterungsbedingungen wie die Prüfkörper aus Beispiel 1 unterworfen. Die dem Ofen entnommenen Prüfkörper waren nicht durchsichtig und zeigten Abplatzungen. Zusätzlich verursachte der Abrieb aus der Mahlstufe dunkle Flecken in den Prüfkörpern.

**Vergleichsbeispiel 5:**

85 kg Wasser wird in einem Rührkessel vorgelegt. Innerhalb einer Stunde werden nun 15 kg von Aluminiumoxidmonohydrat (NB 400 von VAW) in kleinen Portionen von jeweils einem kg zugegeben. Es bildet sich eine Suspension, zu der dann 0,75 kg Essigsäure hinzugefügt wird. Diese Mischung wird dann weitere 5 Stunden gerührt. Der Rührapparat wird dann angehalten. Die Mischung war opak und Festkörper setzten sich nicht ab. Im Anschluß daran wird die Suspension mit einem Sprühtrockner zu einem trockenen Granulat verarbeitet, dessen mittlerer Korndurchmesser 100 μm beträgt.

Das Granulat wird in derselben Art und Weise wie in Beispiel 1 beschrieben zu Prüfkörpern verarbeitet, die dann im Vakuum, genauso wie im Beispiel 1 beschrieben, gesintert werden. Die Ofen entnommenen Prüfkörper sind opak und weisen Abplatzungen sowie Risse auf.

In der nachfolgenden Tabelle sind die Ergebnisse des Beispiels und der Vergleichsbeispiele aufgeführt. Es ist augenscheinlich, daß das erfindungsgemäß hergestellte Produkt deutlich besser für die Herstellung von Transparentkeramik geeignet ist als die vergleichsweise untersuchten Materialien.

| | Gründichte bei 100 N/mm² g/cm³ | Sinterdichte g/cm³ | lin. Schw. | Transparenz |
|---|---|---|---|---|
| Beispiel 1 | 1,20 | 3,93 | 37,5 | 0,73 |
| Vergleichsbeispiel 1 | 1,26 | 3,90 | 34,2 | 0,27 |
| Vergleichsbeispiel 2 | 0,96 | 3,90 | 36,7 | 0,43 |
| Vergleichsbeispiel 3 | 1,40 | 3,89 | 23,3 | 0,33 |
| Vergleichsbeispiel 4 | 1,50 | 3,79 | 21,3 | 0,40 |
| Vergleichsbeispiel 5 | 1,01 | 3,68 | 33,8 | 0,48 |

Die Transparenz wurde mit einem vollautomatisch, computergesteuerten Mikroskop, das quantiative Bildanalysen gestattet, gemessen (TAS +, hergestellt von TAS/Leitz Co). Im Prinzip ist das dabei verwendete Mikroskop mit einer TV-Kamera ausgestattet, die ein digitalisiertes Standbild und statistische Analysen benutzt, um Veränderungen in der Lichtintensität der Testproben zu bestimmen. Die Transparenz von 1 zeigt an, daß die Probe das gesamte eingestrahlte Licht vollständig durchläßt, wo hingegen der Wert 0 anzeigt, daß die Probe lichtundurchlässig ist.

Wird ein säurehaltiges Aluminiumoxidmonohydrat in einem Schritt durch die Kombination Hydrolyse des Aluminiumalkoxids und Peptisierung des sich ergebenden Monohydrats erzeugt, so bietet dies beträchtliche Vorteile bezüglich der Herstellung von gereinigtem Material, das brauchbar ist zur Bildung durchsichtiger Keramikartikel, ohne Kalzination. Das Material ist weich und leicht in nicht kontaktierenden Mühlen zu mahlen, was bedeutet, daß eine Kontamination vermieden wird. Zudem steigt der unverselle Gebrauch dieser transparenten Artikel in dem Maße an, wie Schwankungen in der Teile-Qualität, die kurze Lebensdauer erzeugen können, vermindert werden können. Die Tatsache, daß sich das säurehaltige Aluminiumoxidmonohydrat ohne Weiteres zu einer festen durchsichtigen Keramik weiterverarbeiten läßt, ist im Hinblick die Lehre Yoldas, daß hohe Porosität stets erforderlich sei, um Durchsichtigkeit zu erreichen, überraschend.

**Ansprüche**

1. Verfahren zur Darstellung eines säurehaltigen Aluminiumoxidmonohydrats für die Verwendung bei der Herstellung transparenter Keramik, gekennzeichnet durch folgende Schritte:

- bereitstellen eines Aluminiumalkoxids in einem Lösungsmittel
- solvolysieren und peptisieren dieses Aluminiumalkoxids mit einer Mischung aus Wasserdampf und Säuredampf
- entfernen des Lösungsmittels sowie destillierbarer Nebenprodukte aus der Mischung, wobei sich ein Rückstand bildet
- zugeben von Wasser und erhitzen des Rückstandes mit Wasser bis ein homogenes Gel entstanden ist und
- trocknen des Gels, bestehend im wesentlichen aus Aluminiumhydroxyd mit etwa 12,5 bis 25 Gew.-% gebundener Säure.

2. Verfahren nach Anspruch 1, dadurch gekennzeichnet, daß das getrocknete Gel ohne Fremdkontakt bis zu einem Kornfeinheitsgrad von etwa 2 µm gemahlen wird.

3. Verfahren nach einem der vorhergehenden Ansprüche, dadurch gekennzeichnet, daß der Wasserdampf und der Säuredampf durch Verdampfen einer Wasser- und Säuremischung entsteht.

4. Verfahren nach e.d.v. Ansprüche, dadurch gekennzeichnet, daß der Säuredampf eine einbasige Säure ist.

5. Verfahren nach e.d.v. Ansprüche, dadurch gekennzeichnet, daß der Säuredampf aus jener Gruppe stammt, die im wesentlichen aus Essigsäure, Salzsäure und Salpetersäure besteht.

6. Verfahren nach e.d.v. Ansprüche, dadurch gekennzeichnet, daß das Aluminumalkoxid aus jener Gruppe stammt, die im wesentlichen aus Aluminiumisopropylat, Aluminiumethylat und Aluminiumbuthylat besteht.

7. Verfahren nach e.d.v. Ansprüche, dadurch gekennzeichnet, daß das säurehaltige Aluminiumoxidmonohydrat zwischen 15 und 22,5 % gebundener Säure darin einschließt.

8. Verfahren nach e.d.v. Ansprüche, dadurch gekennzeichnet, daß das gemahlene, säurehaltige Al-oxidmonohydat zu einem Grünkörper trockengepreßt wird.

9. Verfahren nach e.d.v. Ansprüche, dadurch gekennzeichnet, daß der Grünkörper zu festen, transparenten Keramikartikeln gesintert wird.

10. Verfahren nach e.d.v. Ansprüche, dadurch gekennzeichnet, daß sowohl das Lösungsmittel als auch andere Nebenprodukte durch Destillation entfernt werden.

11. Verfahren nach Anspruch 1, dadurch gekennzeichnet, daß der Rückstand und Wasser bei einer Temperatur von etwa 100 °C erhitzt werden.

12. Verfahren nach e.d.v. Ansprüche, dadurch gekennzeichnet, daß das Aluminiumoxidmonohydrat auf einen Wert von etwa 17,5 Gew.-% daran gebundener Säure eingestellt wird.

13. Säurehaltiges Al-oxidmonohydrat für den Gebrauch in der Herstellung transparenter Keramik hergestellt nach den Verfahren der Ansprüche 1. - 12.

14. Säurehaltiges Aluminiumoxidmonohydrat für den Gebrauch in der Herstellung transparenter Keramik, dadurch gekennzeichnet, daß es aus im wesentlichen reinem Aluminiumoxidmonohydrat besteht mit
- einem Anteil von 12,5 - 25 Gew. % an daran gebundener Säure, um die Polarisation der Monohydrat-Teilchen zur Trennung der Teilchen in Wasser zu gewährleisten, wobei die Säure durch schwache elektrostatische Kräfte gebunden ist.

15. Säurehaltiges Oxid-Monohydrat nach Anspruch 14, dadurch gekennzeichnet, daß die gebundene Säure eine einbasige Säure ist.

16. Säurehaltiges Oxid-Monohydrat nach Anspruch 15, dadurch gekennzeichnet, daß die Säure aus Essigsäure, HCl oder $HNO_3$ besteht.

17. Ein transparenter keramischer Artikel, hergestellt nach dem Verfahren des Anspruchs 9.